# EUROPEAN PATENT SPECIFICATION

(11) **EP 1 939 074 B1**
(45) Date of publication and mention of the grant of the patent: **16.02.2011**
(21) Application number: 07380380.1
(22) Date of filing: 27.12.2007
(51) Int. Cl.: B62D 25/14

(54) **Anchoring structure for anchoring the dashboard panel of automobiles**
Befestigungseinrichtung zur Befestigung einer Armaturentafel eines Kraftfahrzeugs
Dispositif de montage d'un tableau de bord d'un véhicule automobile

(30) Priority: 28.12.2006 ES 200602807 U
(43) Date of publication of application: 02.07.2008
(73) Proprietor: Seat, S.A., 08760 Martorell, Barcelona (ES)
(72) Inventor: Martos Ortega, Antonio c/o Seat, S.A., 08760 Martorell (Barcelona) (ES); Rosello Roig, Nuria c/o Seat, S.A., 08760 Martorell (Barcelona) (ES); Guardia Munuera, Pedro c/o Seat, S.A., 08760 Martorell (Barcelona) (ES)
(74) Representative: Carvajal y Urquijo, Isabel

(56) References cited:
- EP-A- 1 388 677
- FR-A- 2 862 268
- US-A1- 2005 217 913

## Description

### Field of the Invention

The present invention relates to an anchoring structure for the front-end panel of automobiles which is formed on each side of the panel by a bar belonging to the framework of the automobile on which there is supported an area of the panel which is fixed to the bar by means of screws or other connecting elements.

### Background of the Invention

Currently the anchoring between the panel and the framework of the automobile is carried out by means of a flat connection that can have different types of configurations, but which in all its variants has to adjust to very precise dispersions and tolerances, since the tolerance interval is very limited due to the fact that the parts are smooth. During the assembly dispersions occur making the panel unable to be correctly positioned. These dispersions translate into an increase in time and in manufacturing and assembly costs, since the panel must be made with care in order to fulfill the tolerance requirements. The small dispersion range available implies using a certain amount of time in verifying the assembly by means of gages or other devices.

Document US 2005/0217913 A shows the preamble of claim 1.

### Description of the Invention

The object of the present invention is to eliminate the problems set forth by means of an assembly structure which allows achieving a correct positioning and centering of the instrument panel with respect to the framework of the automobile. To that end the panel is fixed to the framework by means of side connections incorporating flanges and formations which allow absorbing the dispersions which can occur in the manufacturing of the panel, thus facilitating and simplifying the assembly thereof.

The structure of the invention comprises on each end of the panel a bar belonging to the framework of the automobile, from which a flange projects on which there is supported an especially configured area of the panel. Both the flanges and the support areas of the panel have opposing holes for passing the connecting elements which can consist of screws, clamps, etc.

Each support area of the panel has two through grooves which are located one on each side of the hole having diametrically opposite positions, these grooves being directed in a direction approximately perpendicular to the bar of the framework of the automobile. Running between these two grooves on the side opposite to the side occupied by the bar of the framework of the automobile, there is a bent channel which is concentric with the hole of the support area. This channel is defined by a reduction in thickness of the area of the panel.

The hole of the support area of the panel is preferably surrounded by a draw after which the grooves and the mentioned channel are located.

With the mentioned arrangement, the support areas of the panel are defined by the mentioned cavities which, upon being surrounded by the grooves and channel described, offer a certain absorption capacity which will allow enlarging the range of tolerances, since the possible possibilities that may occur during the manufacture and which can be reflected during the operation of assembling the panel can be compensated.

The hole of the flange projecting from the bar of the framework of the automobile can also be surrounded by a draw which can be coupled on the draw encircling the hole of the corresponding support area of the panel.

According to another feature of the invention the support area of the panel has a recess which will have an outline approximately identical to that of the flange to allow coupling said flange on the support area of the panel, thus achieving a simple coupling between the assembly and connecting elements located on each side of the panel.

The invention offers a side fixing structure of the panel solving the traditional dispersion problems which were presented in traditional solutions.

The element allowing the advantages indicated is integrated in the sides of the panel and is formed by the mentioned support areas with the draw surrounding the fixing holes and grooves and channel and surrounding such holes.

### Brief Description of the Drawings

The arrangement of the structure of the invention is shown in the attached drawings in an embodiment is shown, given by way of a non-limiting example and with the aid of which a more detailed explanation of the invention will be made.

In the drawings:
Figure 1 is a schematic perspective view of the panel assembled with the structure of the invention.
Figure 2 is a front elevational view of one of the sides of the panel with the assembly structure of the invention.
Figure 3 shows in detail the support area of the panel in one of the sides
Figure 4 is a horizontal sectional view of the support area of the panel taken according to the section line 4-IV of Figure 3.
Figure 5 is a vertical sectional view of the anchoring structure of the invention taken according to the section line 5-V of Figure 2.
Figure 6 is a perspective view of the section of Figure 5.
Figure 7 is an inner side view of one of the side fixings of the panel.

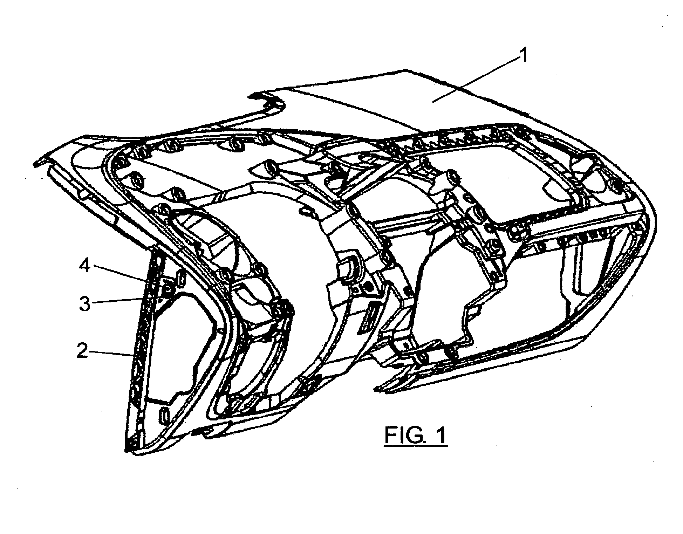

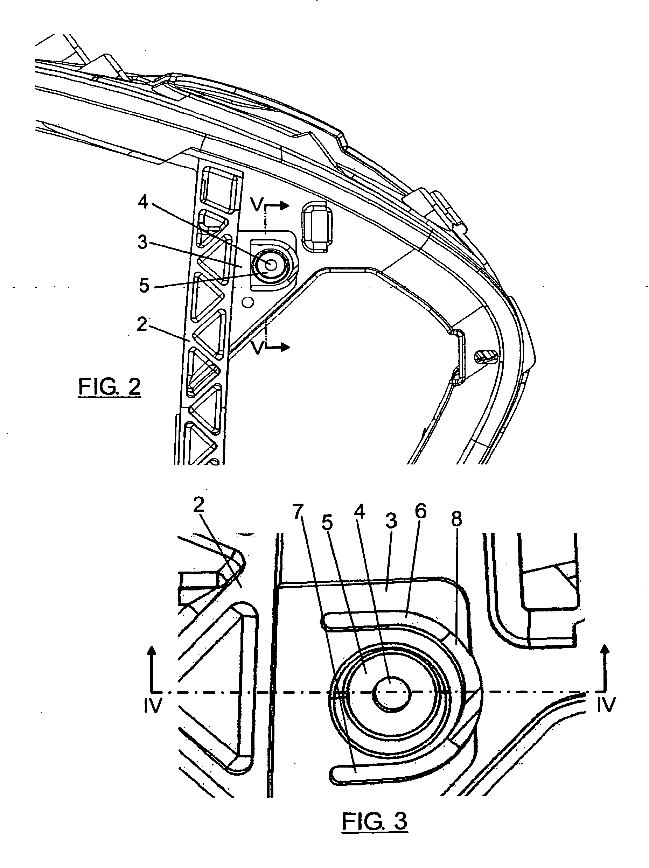

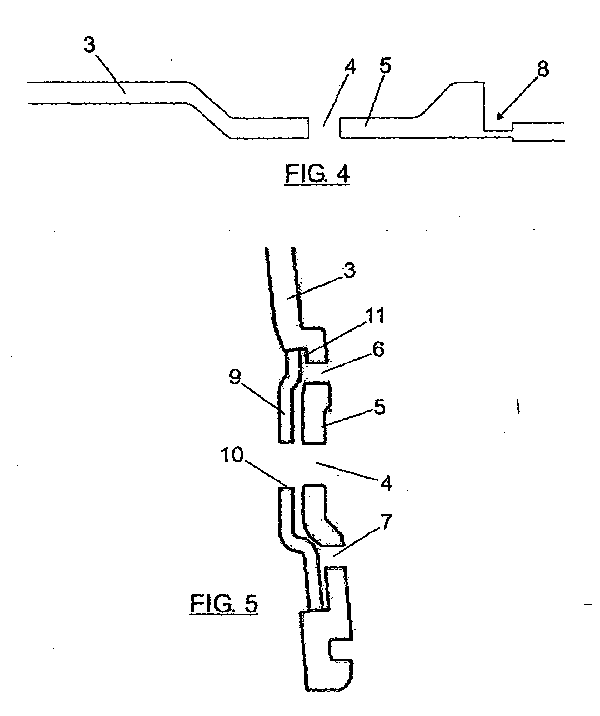

Figure 1 shows a schematic perspective view of the front panel of an automobile which is assembled by means of a side fixing system on respective columns 2 of the framework of structure of the vehicle. The panel 1 incorporates in each one of its sides a support area 3 provided with a hole 4, the hole of which is made inside a draw 5, as can best be observed in Figures 2 and 3. Outside of this draw area 3 has two through grooves 6 and 7, one located on each side of the draw 5, in a direction approximately perpendicular to the bar 2 of the framework of the vehicle. Running between these grooves on the side to opposite the side occupied by the bar 2, there is a bent channel 8 which is approximately concentric with the hole 4. This channel 8 is defined as can best be observed in Figure 4 by a reduction in thickness of the plate forming the support area 3.

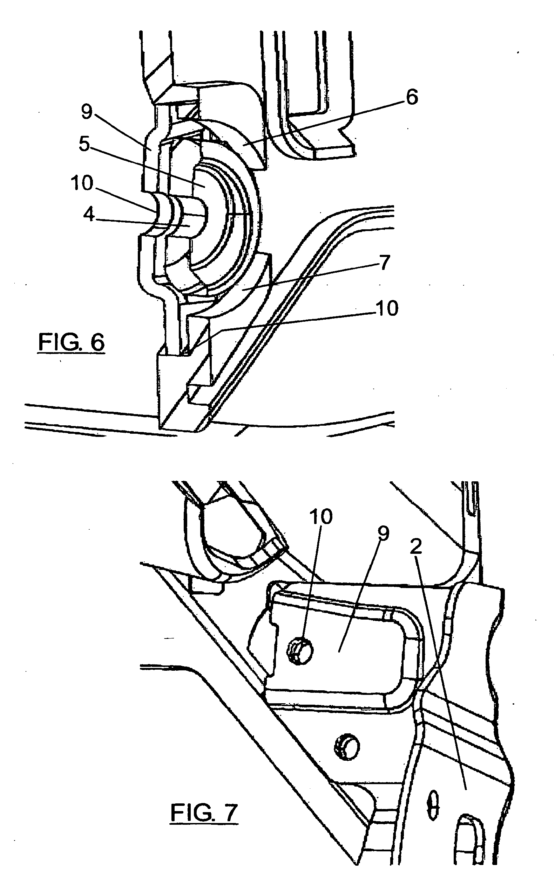

In turn as can best be observed in Figure 7, a flange 9 having a hole 10 opposing hole 4 of area 3 projects from the bar 2. This hole 10 as can best be observed in Figure 5 can also be surrounded by a draw which is coupled exteriorly to the draw 5 of area 3.

The support area 3 can further have a recess 11 in which the flange 9 is coupled as shown in Figures 5 and 6.

The two side fixing areas forming the structure of the invention serve to enlarge the range of tolerances, i.e. to compensate for the possible dispersions that may occur during manufacture. All of this is achieved as a result of the through grooves 6 and 7, therefore the draw 5 with its hole 4 is not connected to the panel along its entire perimeter, but rather they are only connected in two areas, one defined by the channel 8 and the other opposite one, with the entire thickness of the support area 3.

Connecting area 3 and flange 9 can be carried out by means of a screw or a clamp introduced through the corresponding opposing holes 4 and 10, although other connecting elements can be used. With any type of connection which is used the function of the side fixing areas is the same since it is the side absorbing the dispersions.

Upon increasing the dispersion range, it is possible to reduce the times and the costs of manufacturing the panel 1 since the verification process is considerably reduced and the manufacturing can be carried out with less precision. With all this, fixing the panel solves the dispersion problems that traditional fixing systems have.

The fixing structure of the invention is integrated in the sides of panel and is formed by side flanges which are responsible for enlarging the range of available tolerances.

## Claims

1. An anchoring structure for anchoring the front-end panel of automobiles, comprising on each side a bar (2) belonging to the framework of the automobile, from which there projects a flange (9) on which there is supported an area (3) of the panel (1), said flange (9) and area (3) having respective opposing holes (4, 10) for passing the connecting elements; **characterised in that** each support area (3) of the panel (1) has two through grooves (6, 7) one located on each side of the hole, in a direction perpendicular to the mentioned bar (2), running between the end of the grooves (6, 7) on the side opposite to the side occupied by said bar (2), there is a bent channel (8) concentric with the hole (4) which is defined by a reduction in thickness of the area of the panel (1).

2. A structure according to claim 1, **characterized in that** the hole (4) of the support area (3) of the panel (1) is surrounded by a draw (5) after which the mentioned channel (8) and grooves (6) and (7) are located.

3. A structure according to claim 2, **characterized in that** the hole (10) of the flange (9) is surrounded by a draw which can be coupled on the draw surrounding the hole (4) of the corresponding support area (3) of the panel (1).

4. A structure according to the previous claims, **characterized in that** the support area (3) of the panel (1) has a recess (11) on which the flange (9) of the bar (2) of the framework of the automobile is coupled.

## Patentansprüche

1. Verankerungsstruktur für die Frontplatte von Automobilen, umfassend an jeder Seite eine Leiste (2), die zu dem Rahmen des Automobils gehört, von der ein Flansch (9) absteht, auf dem eine Fläche (3) der Platte (1) liegt, wobei der Flansch (9) und die Fläche (3) gegenüber liegenden Löcher (4, 10) aufweisen, durch die die Verbindungsetemente hindurch geführt werden; **dadurch gekennzeichnet, dass** jede Auflagefläche (3) der Platte (1) zwei Durchgangsnuten (6, 7) aufweist, eine an jeder Seite des Lochs, in eine Richtung senkrecht zu der genannten Leiste (2), wobei zwischen dem Ende der Nuten (6, 7) an der Seite, die der Seite gegenüber liegt, die von der Leiste (2) eingenommen wird, ein gekrümmter Kanal (8) konzentrisch zu dem Loch (4) verläuft, der durch eine Verringerung in der Dicke der Fläche der Platte (1) definiert ist.

2. Struktur nach Anspruch 1, **dadurch gekennzeichnet, dass** das Loch (4) der Auflagefläche (3) der Platte (1) von einer Aufnahme (5) umgeben ist, nach der der Kanal (8) und die Rillen (6) und (7) liegen.

3. Struktur nach Anspruch 2, **dadurch gekennzeichnet, dass** das Loch (10) des Flansches (9) von einer Aufnahme umgeben ist, die mit der Aufnahme gekoppelt werden kann, die das Loch (4) der entsprechenden Auflagefläche (3) der Platte (1) umgibt.

4. Struktur nach einem der vorangehenden Ansprüche, **dadurch gekennzeichnet, dass** die Auflagefläche (3) der Platte (1) eine Vertiefung (11) aufweist, an die der Flansch (9) der Leiste (2) des Rahmens des Automobils gekoppelt ist.

## Revendications

1. Une structure d'ancrage pour ancrer le panneau avant d'automobiles, comprenant de chaque côté une barre (2) appartenant au châssis de l'automobile, de laquelle ressort un épaulement (9) sur lequel repose une zone (3) du panneau (1), cet épaulement (9) et cette zone (3) étant respectivement dotés de trous (4,10) situés l'un en face de l'autre pour le passage des éléments de raccordement ; **caractérisée en ce que** chaque zone de support (3) du panneau (1) possède deux rainures de passage (6, 7), une de chaque côté du trou, perpendiculairement à la barre (2) susmentionnée, l'espace entre l'extrémité des rainures (6,7) du côté opposé au côté occupé par cette barre (2) étant parcouru par une cannelure incurvée (8) concentrique avec le trou (4) qui est défini par une réduction de l'épaisseur de la zone du panneau (1).

2. Une structure selon la revendication 1, **caractérisée en ce que** le trou (4) de la zone de support (3) du panneau (1) est entouré d'une zone évidée (5) après laquelle sont situées la cannelure (8) mentionnée et les rainures (6).

3. Une structure selon la revendication 2, **caractérisée en ce que** le trou (10) de l'épaulement (9) est entouré d'une zone évidée qui peut être montée sur la zone évidée entourant le trou (4) de la zone de support (3) correspondante du panneau (1).

4. Une structure selon les revendications précédentes, **caractérisée en ce que** la zone de support (3) du panneau (1) possède une cavité (11) sur laquelle l'épaulement (9) de la barre (2) du châssis de l'automobile est monté.
